(19) Europäisches Patentamt / European Patent Office / Office européen des brevets

(11) **EP 3 168 981 B1**

(12) **EUROPEAN PATENT SPECIFICATION**

(45) Date of publication and mention of the grant of the patent:
**16.10.2019 Bulletin 2019/42**

(51) Int Cl.:
*H02P 1/16* *(2006.01)*     *H02P 25/089* *(2016.01)*
*H02P 6/182* *(2016.01)*     *H02P 1/02* *(2006.01)*

(21) Application number: **16167929.5**

(22) Date of filing: **02.05.2016**

(54) **ROTOR POSITION DETECTION APPARATUS AND MOTOR CONTROL APPARATUS**

ROTORPOSITIONSERFASSUNGSVORRICHTUNG UND MOTORSTEUERUNGSVORRICHTUNG

APPAREIL DE DÉTECTION DE POSITION DE ROTOR ET APPAREIL DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2015 JP 2015220722**

(43) Date of publication of application:
**17.05.2017 Bulletin 2017/20**

(73) Proprietors:
• **Sinfonia Technology Co., Ltd.**
  **Minato-ku,**
  **Tokyo 105-8564 (JP)**
• **Takahashi, Hisashi**
  **Sagamihara-shi, Kanagawa 252-0318 (JP)**
• **Yamamoto, Kenji**
  **Midori-ku**
  **Sagamihara-shi, Kanagawa 252-0143 (JP)**

(72) Inventors:
• **KANAZAWA, Kazunari**
  **Tokyo 105-8564 (JP)**
• **IKEDA, Hiroshi**
  **Tokyo 105-8564 (JP)**
• **ITO, Yuki**
  **Tokyo 105-8564 (JP)**

• **TOMIZAKI, Takeshi**
  **Tokyo 105-8564 (JP)**
• **TAKAHASHI, Hisashi**
  **Sagamihara-shi, Kanagawa 252-0318 (JP)**
• **YAMAMOTO, Kenji**
  **Sagamihara-shi, Kanagawa 252-0143 (JP)**

(74) Representative: **TBK**
  **Bavariaring 4-6**
  **80336 München (DE)**

(56) References cited:
**EP-A1- 0 642 213     EP-A2- 1 471 629**
**US-A- 5 180 960      US-A1- 2002 149 331**

• **FERRERO A ET AL: "A DIGITAL METHOD FOR THE DETERMINATION OF THE MAGNETIC CHARACTERISTIC OF VARIABLE RELUCTANCE MOTORS", IEEE TRANSACTIONS ON INSTRUMENTATION AND MEASUREMENT, IEEE SERVICE CENTER, PISCATAWAY, NJ, US, vol. 39, no. 4, 1 August 1990 (1990-08-01) , pages 604-608, XP000147631, ISSN: 0018-9456, DOI: 10.1109/19.57241**
• **T J E MILLER: "Electrical Control of Switched Reluctance Machines", NEWNES POWER ENGINEERING SERIES, 31 December 2001 (2001-12-31), XP040425932, ISBN: 0750650737**

EP 3 168 981 B1

**Description**

**TECHNICAL FIELD OF THE INVENTION**

The present invention relate to a rotor position detection apparatus and a motor control apparatus, which are applied to a motor having a salient pole rotor and a stator with windings for switching an excitation phase while detecting a position of the rotor.

**BACKGROUND ART**

There is a switched reluctance motor (hereinafter referred to as an "SR motor") as one of motors having a stator with a salient pole rotor and an excitation winding. An SR motor has a simple structure and requires no permanent magnets, thus suitable for operation at high speeds and high temperatures. A rotation principle of an SR motor is as follows. When the stator salient pole and a rotor salient pole are aligned (salient pole aligned state), a magnetic impedance is reduced and a winding inductance becomes maximum. Thus, when an exciting current flows through a winding of a salient pole in a salient pole non-aligned state that a magnetic flux is difficult to flow, a rotor is rotated to a salient pole aligned state that a magnetic flux flow most easily. Therefore, by switching a phase for supplying an exciting current based on rotor position information, it is possible to rotate a rotor by generating a continuous magnetic attractive force.

As a means for obtaining rotor position information, a position detection sensor has conventionally been used. However, such a sensor is not suitable for use under severe conditions of high-speed and high-temperature operations described above.

Therefore, in recent years, a method for sensorless detection of a rotational position of a rotor without using a position detection sensor has been proposed (Non-Patent Literature 1).

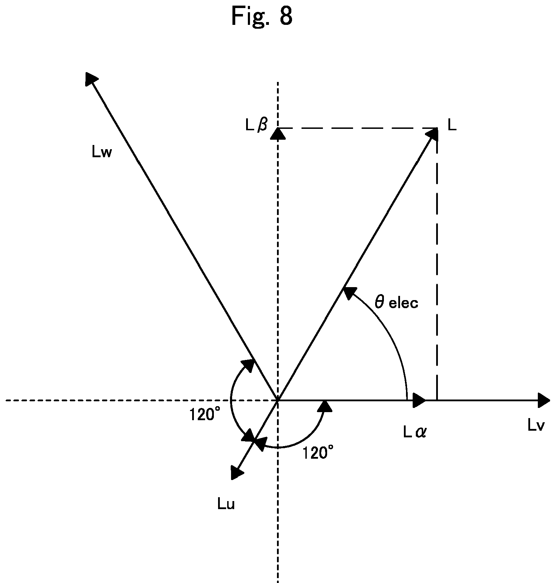

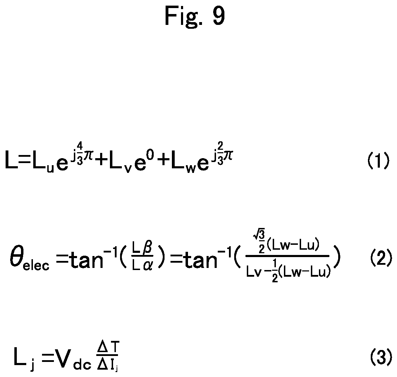

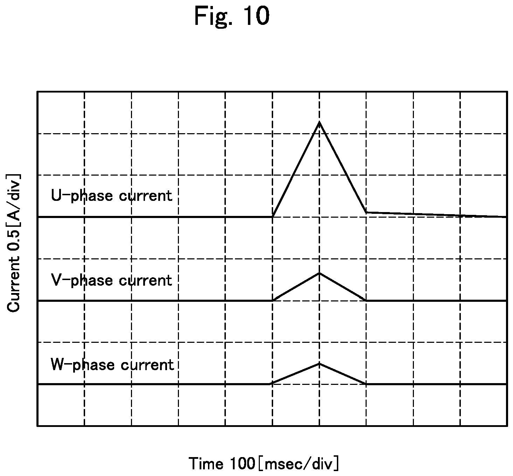

Non-Patent Literature 1, as shown in Figs. 8 to 10, shows a method of estimating a rotor position by using a self-inductance distribution of an SR motor. Fig. 8 is a diagram showing a space vector of a self-inductance. Fig. 9 shows equations representing the relationship between vectors represented in a space vector. Fig. 10 is a graph showing current waveforms when a voltage pulse is applied under certain conditions. In these figures, Lu, Lv, Lw represents a magnitude of a self-inductance of each phase, $\theta_{elec}$ represents a phase (electrical angle) of a space vector L, Vdc represents a DC link voltage, $\Delta T$ represents a DC link voltage application time, Lj represents an inductance of a J-phase (j is u, v, or w), and $\Delta lj$ represents an increase in a current when the DC link voltage is applied to the j-phase. When the self-inductance distribution is approximated and the space vector is defined, a space vector angle coincides with a rotor position. A rotor position is estimated based on this fact.

The equation (1) in Fig. 9 represents a space factor of a self-inductance. This space vector is constant in magnitude, and rotates in synchronization with a rotor angle (electrical angle). A rotor position can be estimated by calculating a space vector angle. The space vector phase $\theta_{elec}$ shown in Fig. 8 can be calculated by the equation (2).

Therefore, it is possible to calculate a space vector phase from a self-inductance of each phase. This phase coincides with a rotor position, and it is possible to estimate a rotor position.

A self-inductance of each phase is calculated from a current response (see Fig. 10) by applying a voltage pulse at the time of shutdown. In this way, by using the equation (3) in Fig. 9, a self-inductance of each phase is calculated from a current response when a DC link voltage is simultaneously applied to each phase for a short time. Position estimation is possible from the self-inductance by using a space vector display.

Document US 5 180 960 A discloses a circuit arrangement for commutating a reluctance motor having a rotor movable relative to a stator and having a winding to which in specific positions of the rotor relative to the stator a current is applied by means of a switching device, and including a detection arrangement by which a voltage induced in the winding is detected and which enables the switching device when the induced voltage reaches a predetermined value. In a circuit arrangement of this type a simple, modular and thus universally usable structure is achieved in that the winding comprises at least three winding sections arranged substantially equidistant along the motion coordinate of the rotor and winding sections that can individually admit current, so that from each winding section the voltage induced therein is tapped and the enable signal is derived when the predetermined value is reached, as a result of which signal the power supply to the preceding winding section viewed in the direction of the motion coordinate of the rotor is terminated and initiated at a next winding section.

Document EP 1 471 629 A2 discloses a rotor position determination in a switched reluctance motor. The reluctance drive is controlled without using a physical rotor position detector. The control method causes current to flow continuously in a single winding when the rotor is turning and detects position by finding either the peak of the current waveform or some other feature which can be uniquely related to the position of the rotor. The method involves applying voltage to the phase winding of a stator independent of the period of the movement of the rotor, and detecting peak of current waveform to determine the position of the rotor.

Non-Patent literature 2 discloses a digital method for the measurement of the magnetic flux, starting from the digital integration of the induced electromotive force (EMF). The method is applied to the determination of the flux-linkage-versus-current diagrams of a variable-reluctance (VR) motor. Two different methods are proposed to determine flux variations in the motor magnetic circuit, and the results of the experimental work carried out on a typical 4-kW switched reluctance (SR) motor, show that the methods are in good agreement.

**CITATION LIST**

**PATENT LITERATURE**

Non-Patent Literature 1: Akiyoshi Komatsuzaki, Yojiro Miura, Ichiro Miki "Position Sensorless Control of SRM Using Space Vector Display of Self-inductance" Institute of Electrical Engineers Study Group Document. RM, Rotating Machine Study Group 2008 (90), 11-16, 2008-11-12

Non-Patent Literature 2: Ferrero A. et al: "A digital method for the determination of the magnetic characteristic of variable reluctance motors", IEEE Transactions on Instrumentation and Measurement, IEEE Service Center, Piscataway, NJ, US, vol. 39, No. 4, 1 August 1990

**SUMMARY OF THE INVENTION**

**PROBLEMS TO BE SOLVED BY THE INVENTION**

The method described above calculates a self-inductance from a current response, and it is necessary that a rotor is in a stationary state and an inductance is not changed. Thus, there is a problem that position estimation is impossible in a situation where an SR motor is rotated from outside.

The present invention has focused on the above problems. Accordingly, it is an object of the invention to provide a rotor position detection apparatus and a motor control apparatus, which are capable of performing valid position detection in a situation where a motor is rotated from outside in a non-excited state where a main winding is not excited for driving.

**MEANS FOR SOLVING THE PROBLEM**

This object is achieved by a rotor position detection apparatus according to claim 1 or claim 2. Furthermore, a motor control apparatus according to claim 3 is provided.

In order to achieve the above object, the present invention has taken the following measures.

A rotor position detection apparatus according to an aspect is applied to a motor comprising a stator that is provided with salient poles corresponding to a plurality of phases, each salient pole provided with an excitation winding, and a rotor that is disposed in the stator and provided with a plurality of salient poles. The rotor position detection apparatus comprises a micro constant current application unit that applies a micro constant current to the excitation winding, and a polarity inversion detection means for detecting polarity inversion of a magnetic flux appearing in the stator of the motor.

With such a configuration, a salient pole opposed position can be detected through a polarity inversion position of a magnetic flux. Therefore, complicated calculations are unnecessary, and it is possible to detect a rotor position while a rotor is rotating, even at a high speed. At this time, a rotor need not be rotated at a constant speed. The rotor position detection is possible even under fluctuation of speed.

In order to detect a position of a rotor during rotation in a non-excited state with a relatively simple hardware configuration, a polarity inversion detection means comprises an auxiliary winding wound around a stator tooth portion or a stator yoke portion, and a zero-cross detection unit for detecting a zero-cross of an induced voltage appearing in the auxiliary winding.

By applying the above rotor position detection apparatus and starting excitation at a magnetic flux inversion timing, it is possible to appropriately shift a salient pole motor from a non-excited state to an excited state with a simple configuration.

**ADVANTAGE OF THE INVENTION**

According to the present invention described above, it is possible to provide a rotor position detection apparatus, which is able to perform valid rotor position detection even in a situation where a rotor is rotated from outside in a non-excited state in which a main winding is not excited for driving, and is able to be effectively applied to a system provided with no position sensor due to environmental restrictions such as high temperatures and limitation of space.

**BRIEF DESCRIPTION OF THE DRAWINGS**

Fig. 1 is a schematic cross-sectional view of an SR motor to which an embodiment of the present invention is applied;

Fig. 2 is a diagram showing a rotation principle of the SR motor;

Fig. 3 is a diagram showing a relationship between an auxiliary winding provided in the SR motor and a magnetic flux flowing therethrough;

Fig. 4 is a diagram showing a zero-cross of an inductance induced voltage corresponding to a rotor position of the SR motor;

Fig. 5 is a schematic diagram of a motor control apparatus to which a rotor position detection apparatus of the SR motor is applied;

Fig. 6 is a diagram showing a modification of the present invention corresponding to Fig. 3;

Fig. 7 is a diagram showing an example based on a modification of the present invention corresponding to Fig. 5, the example being useful to understand the invention;

Fig. 8 is a diagram showing a space vector of a self-inductance according to a conventional example;

Fig. 9 shows relational expressions between vectors represented in the space vector; and

Fig. 10 is a diagram showing current waveforms when a DC link voltage is applied to each phase for a short time during shutdown.

**DESCRIPTION OF THE PREFERRED EMBODIMENTS**

Hereinafter, a motor control apparatus according to the present invention will be described with reference to the drawings.

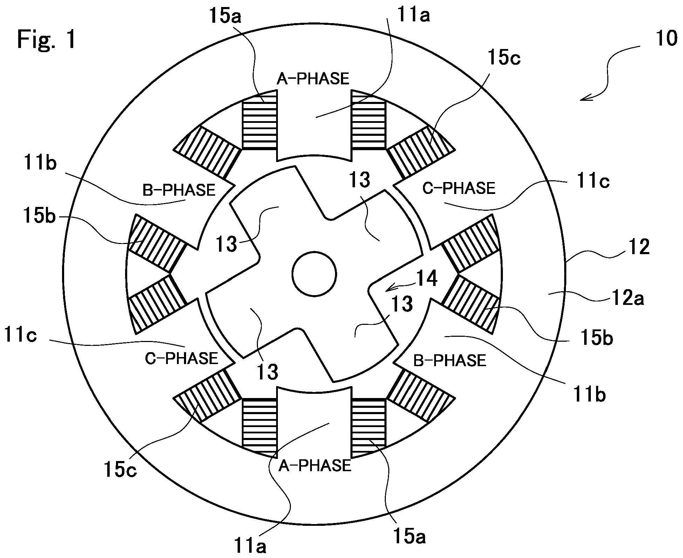

Fig. 1 is a simplified diagram showing a structure of a SR motor 10 serving as a salient pole motor to which a motor control apparatus Z of the present invention is applied. The SR motor 10 shown in Fig. 1 comprises a stator 12 having six salient poles (stator tooth portion) 11 (11a, 11b, 11c) projecting from an annular stator yoke portion 12a toward inside, and a rotor 14 having four salient poles 13 rotatably disposed inside the stator 12 and projecting toward outside. The salient pole 11 of the stator 12 is disposed at equal interval of 60 degrees, and the salient pole 13 of the rotor 14 is disposed at equal interval of 90 degrees, thereby forming a 4-rotor pole 6-stator pole configuration (so-called a 4-6 motor).

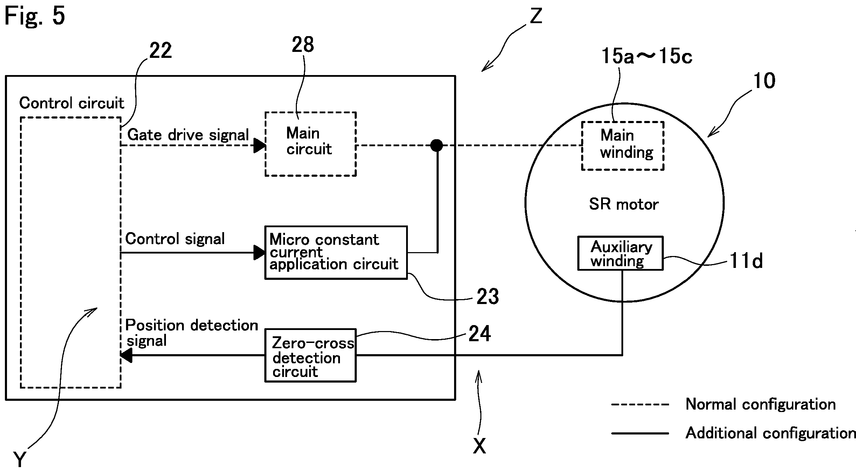

Hereinafter, description will be based on the 4-6 motor, but the number of poles is not limited to this. Main windings for excitation 15a and 15a, 15b and 15b, and 15c and 15c are wound respectively around opposed salient poles 11a and 11a, 11b and 11b, and 11c and 11c of the stator 12. This forms a 3-phase stator 12, which includes an A-phase comprising a pair of salient poles 11a and 11a wound with the main windings for excitation 15a and 15a, a B-phase comprising a pair of salient poles 11b and 11b wound with the main windings 15b and 15b for excitation, and a C-phase comprising a pair of salient poles 11c and 11c wound with the main windings for excitation 15c and 15c. A main circuit 28 is connected to each winding 15a to 15c based on Fig. 5, so that a control circuit 22 outputs a gate drive signal to the main circuit 28 for selectively applying an excitation voltage to one of A- to C-phases.

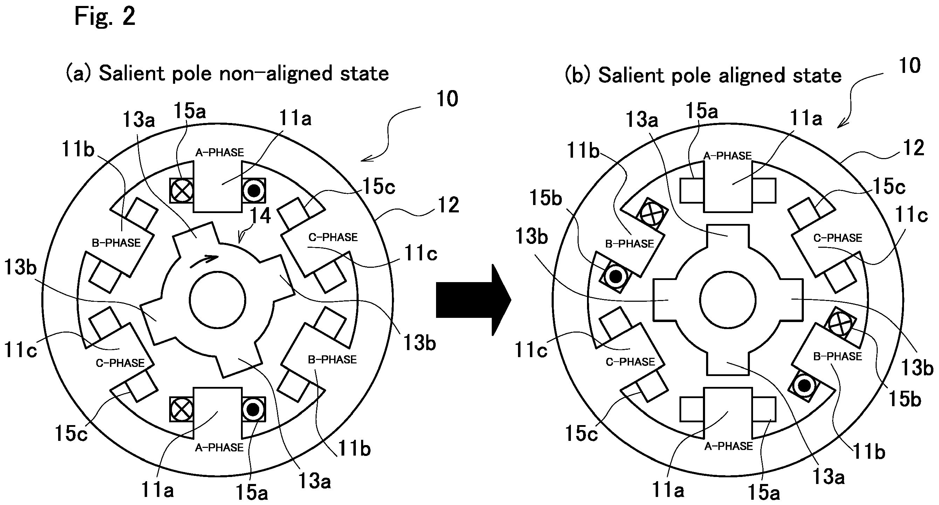

Here, a rotation principle of the SR motor 10 will be explained with reference to Fig. 2. Fig. 2 (a) shows a location of the rotor 14 in a salient pole non-aligned state, where the salient poles 11a to 11c of the stator 12 are not opposed to the salient poles 13a to 13b of the rotor 14, and a magnetic flux is difficult to flow. At this point, the winding 15a of the stator 12, that is, the A-phase is excited. At this time, a torque is generated in the rotor 14, and the rotor 14 is rotated, in a salient pole aligned state where a magnetic flux is most likely to flow, that is, the salient pole 11a is aligned with the salient pole 13a of the rotor 14. Then, the control circuit 22 shown in Fig. 5 switches a phase to be excited to the B-phase at the timing when the rotor 14 is rotated to the salient pole aligned state shown in Fig. 2 (b). A torque is generated so that the salient pole 11b of the stator 12 is aligned with the salient pole 13b of the rotor 14. Then, the control circuit 22 switches a phase to be excited to the C-phase at the timing when the salient pole 11b of the stator 12 is aligned with the salient pole 13b of the rotor 14. A torque is generated so that the salient pole 11c of the stator 12 is aligned with the salient pole 13a of the rotor 14. In this way, by switching an excitation phase based on the position of the rotor 14, a torque is generated by a continuous magnetic attraction force, and the SR motor 10 is rotated.

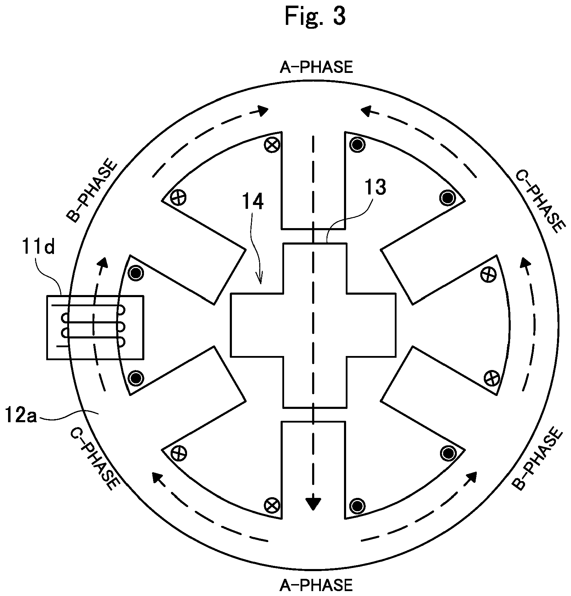

In the present embodiment configured as above, in order to detect a rotor position in a non-excited state and during rotation, the micro constant current application unit (circuit) 23 shown in Fig. 5 is connected to the main winding for excitation 11a to be able to apply a micro constant current to one of the main circuits 15a to 15c (15a in this embodiment). A magnetic flux polarity inversion detection means X is configured with an auxiliary winding 11d for rotor position detection in the stator yoke portion 12a separately from the main windings for excitation 11a, 11b, and 11c, as shown in Figs. 3 and 5, and a zero-cross detection unit (circuit) 24 for detecting a zero-cross of an induced voltage appearing in the auxiliary winding 11d. Thereby, a rotor detection apparatus Y is configured. The auxiliary winding 11d is not to be limited in number, as long as one or more, not to be located between B and C phases, as shown in Fig. 3, and may be provided in any number and any location in the stator yoke portion 12a.

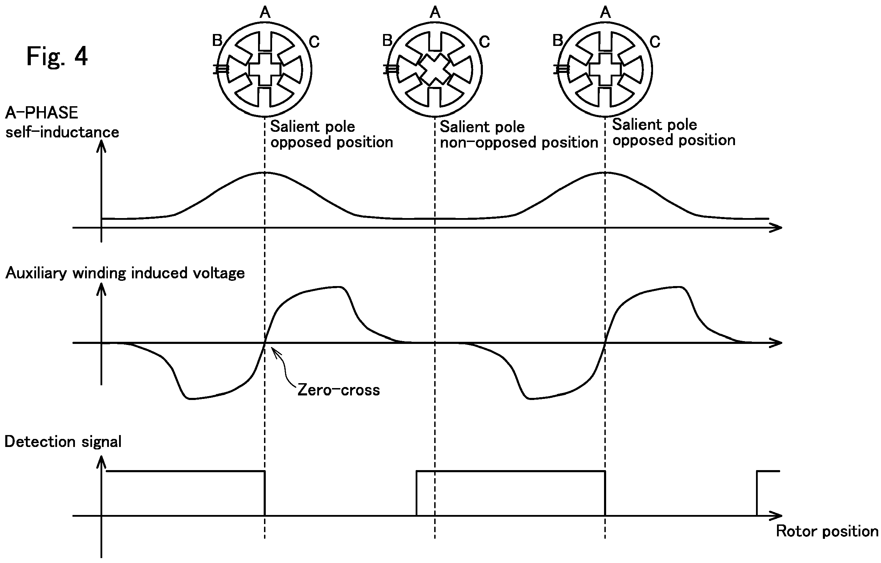

With regard to a magnitude of self-inductance when a magnetic flux flows due to self-induction in each phase of the SR motor 10, a self-inductance of A-phase becomes maximum as shown in Fig. 4 in an aligned state that the stator 12 of A-phase is opposed to the salient pole 13 of the rotor 14 as shown in Fig. 3. As deviating from there to a non-aligned direction, the self-inductance is reduced depending on the salient pole positional relationship between the stator 12 and the rotor 14.

In other words, as long as a maximum point of self-inductance can be observed, it is possible to detect a salient pole opposed position four times in one rotation. However, it is difficult to observe a self-inductance directly, and this embodiment uses an induced voltage generated in the auxiliary winding 11d provided on the stator yoke portion 12a.

A relationship between the induced voltage (V) generated in the auxiliary winding 11d, the interlinkage magnetic flux number (Φ), the current (I), and the inductance (L) will be described.

The interlinkage magnetic flux number is expressed by the equation (1).

$$LI = \Phi \qquad \dots (1)$$

Further, an induced electromotive force (induced voltage) generated in the auxiliary winding 11d is expressed by the equation (2) by the Faraday's law.

$$V = -d\Phi/dt \quad \dots (2)$$

Assuming the current to be constant, the equation (3) is established.

$$V = -d\Phi/dt = -(dL/dt) \times I \quad \dots (3)$$

Therefore, the induced voltage V is a product of the differential value of the inductance L and the current I. Further, as seen from Fig. 4, the polarity of the differential value of the inductance L is reversed at the salient pole opposed position, and the polarity of the induced voltage V is also reversed.

Therefore, the micro constant current application unit (circuit) 23 applies a micro DC current to one of the main windings 15a to 15c (15a in this embodiment) of the SR motor 10. The zero-cross detection unit (circuit) 24 detects a zero-cross of the induced voltage V appearing in the auxiliary winding 11d, and inputs the detection signal to the control circuit 22. By the zero-cross timing of the detection signal, it is detected that the rotor 14 has reached the salient pole opposed position. The detection signal in Fig. 4 is picked up by a comparator at a point where the induced voltage becomes positive. Any configuration is permitted as far as the zero-cross can be detected.

When the rotor position can be detected in this way, it is possible to know the speed of the rotor 14 and the timing when the A-phase has reached the salient pole aligned state. Thus, when switching the SR motor 10 from the non-excited state to the excited state, the motor control apparatus Z can utilize this for controlling the excitation start timing and the like in the control circuit 22.

Further, by setting the applied current to a micro current of about 1/100 of a rated current, a torque generated is negligible and does not affect the rotation in a non-excited state.

As described above, the rotor position detection apparatus Y according to the present embodiment is applied to the SR motor 10 comprising the stator 12 that is provided with the salient pole 11 (11a, 11b, 11c) corresponding to a plurality of phases, each salient pole 11 (11a, 11b, 11c) provided with the excitation winding 15a, 15b, 15c, respectively; and the rotor 14 that is disposed in the stator 12 and provided with a plurality of salient poles 13. The rotor position detection apparatus Y comprises the micro constant current application unit (circuit) 23 for applying a micro constant current to the excitation winding 15a and the like, and the polarity inversion detection means X for detecting polarity inversion of the magnetic flux appearing in the stator 12 of the SR motor 10, thereby detecting the arrival of the rotor at the salient pole opposed position through the magnetic flux polarity inversion. Therefore, complicated calculations are unnecessary, and it is possible to detect the rotor position while the rotor 14 is being rotated at a high speed. At this time, the rotor 14 need not be rotated at a constant speed. The rotor position detection is possible even while the speed fluctuates.

In particular, the polarity inversion detection means X comprises the auxiliary winding 11d wound around the stator yoke portion 12a, and the zero-cross detection unit (circuit) 24 for detecting a zero-cross of the induced voltage appearing in the auxiliary winding 11d. In addition to the micro constant current application unit (circuit) 23, it is adequate that the auxiliary winding 11d and the zero-cross detection unit (circuit) 24 are provided as the polarity inversion detection means X. Therefore, rotor position detection is possible during rotation in a non-excited state with a relatively simple hardware configuration.

By applying the rotor position detection apparatus Y described above, the motor control apparatus Z can detect an excitation start timing based on a rotor position upon detection of magnetic flux inversion. Therefore, it is possible to shift a salient pole motor from a non-excited state to an excited state with a simple configuration.

It should be noted that a specific configuration of each unit is not limited only to the embodiments described above.

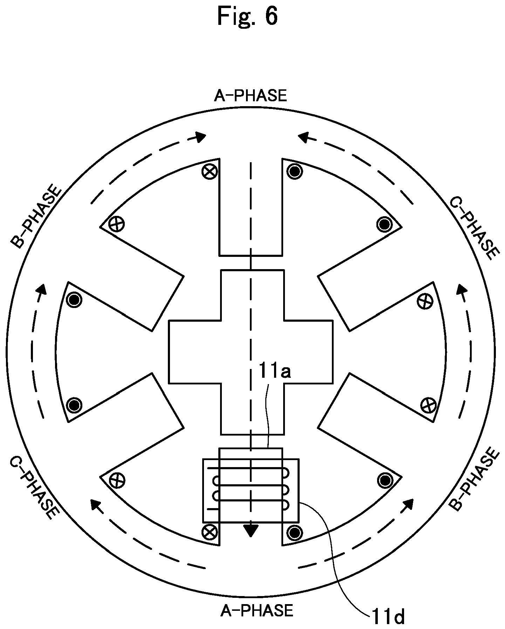

For example, as shown in Fig. 6, the polarity inversion detection means X may be configured by winding the auxiliary winding 11d around the salient pole (stator tooth portion) 11a, so that the zero-cross detection unit 24 detects a zero-cross of the induced voltage appearing in the auxiliary winding 11d when a micro constant current is applied from the micro constant current application unit (circuit) 23.

Even in such a configuration, in addition to the micro constant current application unit (circuit) 23, it is adequate that the auxiliary winding 11d and the zero-cross detection unit (circuit) 24 are provided as the polarity inversion detection means X. Therefore, rotor position detection is possible during rotation in a non-excited state with a relatively simple hardware configuration.

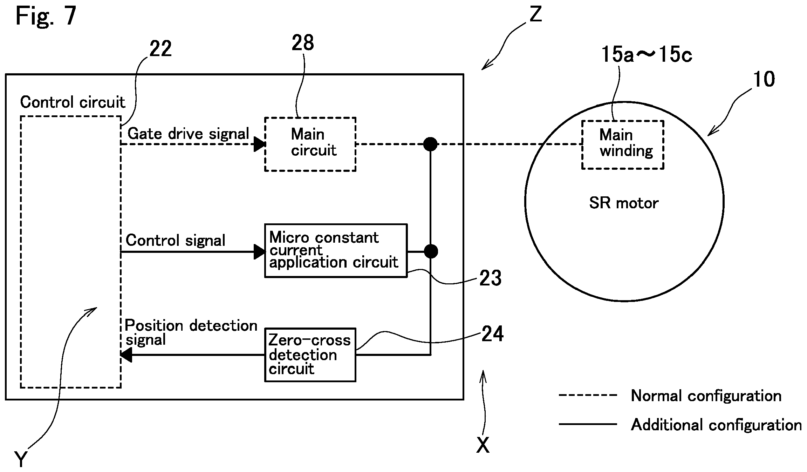

According to an example useful to understand the invention, the polarity inversion detection means X may also be configured such that the zero-cross detection unit 24 detects a zero-cross of not the induced voltage generated in the auxiliary winding, but the exciting voltage when a micro constant current is applied to one of the main windings 15a to 15c (e.g., 15a) as shown in Fig. 7. This will be explained below using equations.

A voltage equation of the SR motor is as follows.

$$V = I \times R + (dI/dt) \times L + \omega \times (dL/d\theta) \times I \ \ldots (4)$$

Assuming the current to be constant, the equation (5) is established.

$$V = I \times R + \omega \times (dL/d\theta) \times I \ \ldots (5)$$

Here, assuming that the current is very small and the resistance is negligible in "I × R", the equation (6) is established.

$$V = \omega \times (dL/d\theta) \times I \ \ldots (6)$$

Therefore, the applied V depends on an inclination polarity of the inductance L, and the polarity is reversed in the salient pole opposed position. Thus, like the auxiliary winding system, the salient pole opposed position can be detected even by using the zero-cross detection unit (circuit) 24 during excitation of the main winding. Further, this eliminates the necessity of using the auxiliary winding, and the rotor position detection is possible during rotation in a non-excited state with a relatively simple hardware configuration.

The "I × R" ignored in the equation (6) becomes an error factor. However, as the applied current "I" and the winding resistance "R" are known, in the case where they are corrected or negligible, the auxiliary winding for rotor position detection can be eliminated in this example useful to understand the invention.

According to another example useful to understand the invention, the polarity inversion detection means may comprise a Hall element for directly detecting a magnetic flux flowing in the stator yoke portion or the stator tooth portion, and a zero-cross detection unit for detecting an inclination zero-cross of the magnetic flux detected by the Hall element.

Even in such a configuration, in addition to a micro constant current application unit, it is adequate that a Hall element and a zero-cross detection unit are provided as a polarity inversion detection means. Therefore, rotor position detection is possible during rotation in a non-excited state with a relatively simple hardware configuration.

Other configurations may also be modified in various forms without departing from the scope of the present invention as defined in the appended claims. The rotor position detection apparatus Y is applied to an SR motor 10 comprising a stator 12 which is provided with salient poles 11 (11a, 11b, 11c) corresponding to a plurality of phases, each salient pole 11 (11a, 11b, 11c) provided with an excitation winding 15a, 15b, 15c and a rotor which is disposed in the stator and provided with a plurality of salient poles 13. The rotor position detection apparatus comprises a micro constant current application unit (circuit) 23 which applies a micro constant current to the excitation winding, and a polarity inversion detection means X which detects polarity inversion of a magnetic flux appearing in the stator 12 of the SR motor 10, thereby detecting a salient pole opposed position through a magnetic flux polarity inversion position.

**DESCRIPTION OF REFERENCE NUMERALS**

| | |
|---|---|
| 11a | Salient pole, Stator tooth portion (stator side) |
| 15a to 15c | Main winding |
| 11d | Auxiliary winding |
| 12 | Stator |
| 12a | Stator yoke portion |
| 13 | Salient pole (rotor side) |
| 14 | Rotor |
| 23 | Micro constant current application unit (circuit) |
| 24 | Zero-cross detection unit (circuit) |
| X | Polarity inversion detection means |
| Y | Rotor position detection apparatus |
| Z | Motor control apparatus |

**Claims**

1. A rotor position detection apparatus (Y) of a motor (10) comprising a stator (12) which is provided with salient poles (11a, 11b, 11c) corresponding to a plurality of phases, each salient pole (11a, 11b, 11c) provided with a main excitation winding (15a, 15b, 15c), and a rotor (14) which is disposed in the stator (12) and provided with a plurality of salient poles (13), wherein the rotor position detection apparatus (Y) is configured to detect the position of the rotor (14) in a situation where the rotor (14) is rotated in a non-excited state in which the main excitation winding (15a, 15b, 15c) is not excited for driving, and comprises:

   a constant current application unit (23) which is configured to apply a constant current for detecting zero-cross to the main excitation winding (15a, 15b, 15c); and
   a polarity inversion detection means (X) which is configured to detect polarity inversion of a differential value of a magnetic flux appearing in the stator (12) of the motor (10),
   wherein the polarity inversion detection means (X) comprises
   an auxiliary winding (11d) wound around a stator tooth portion (11a), and
   a zero-cross detection unit (24) configured to detect a zero-cross of an induced voltage caused by a temporal change of a self-inductance of the main excitation winding (15a, 15b, 15c) and appearing in the auxiliary winding (11d) due to the applied constant current, wherein the zero-cross is detected in a salient pole opposed position.

2. A rotor position detection apparatus (Y) of a motor (10) comprising a stator (12) which is provided with salient poles (11a, 11b, 11c) corresponding to a plurality of phases, each salient pole (11a, 11b, 11c) provided with a main excitation winding (15a, 15b, 15c), and a rotor (14) which is disposed in the stator (12) and provided with a plurality of salient poles (13), wherein the rotor position detection apparatus (Y) is configured to detect the position of the rotor (14) in a situation where the rotor (14) is rotated in a non-excited state in which the main excitation winding (15a, 15b, 15c) is not excited for driving, and comprises:

   a constant current application unit (23) which is configured to apply a constant current for detecting zero-cross to the main excitation winding (15a, 15b, 15c); and
   a polarity inversion detection means (X) which is configured to detect polarity inversion of a differential value of a magnetic flux appearing in the stator (12) of the motor (10),
   wherein the polarity inversion detection means (X) comprises
   an auxiliary winding (11d) wound around a stator yoke portion (12a), and
   a zero-cross detection unit (24) configured to detect a zero-cross of an induced voltage caused by a temporal change of a self-inductance of the main excitation winding (15a, 15b, 15c) and appearing in the auxiliary winding (11d) due to the applied constant current, wherein the zero-cross is detected in a salient pole opposed position.

3. A motor control apparatus (Z), comprising the rotor position detection apparatus (Y) according to claims 1 or 2, and configured to start excitation based on a rotor position upon detection of a magnetic flux inversion.

**Patentansprüche**

1. Rotorpositionserfassungsvorrichtung (Y) eines Motors (10), der einen Stator (12), der mit Schenkelpolen (11a, 11b, 11c) versehen ist, die einer Vielzahl von Phasen entsprechen, wobei jeder Schenkelpol (11a, 11b, 11c) mit einer Hauptanregungswicklung (15a, 15b, 15c) versehen ist, und einen Rotor (14) umfasst, der in dem Stator (12) angeordnet ist und mit einer Vielzahl von Schenkelpolen (13) versehen ist, wobei die Rotorpositionserfassungsvorrichtung (Y) konfiguriert ist, die Position des Rotors (14) in einer Situation zu erfassen, in der der Rotor (14) in einem nicht angeregten Zustand gedreht wird, in dem die Hauptanregungswicklung (15a, 15b, 15c) nicht für ein Antreiben angeregt ist, und umfasst:

   eine Konstantstromzufuhreinheit (23), die konfiguriert ist, der Hauptanregungswicklung (15a, 15b, 15c) einen konstanten Strom für eine Erfassung eines Nulldurchgangs zuzuführen; und
   eine Polaritätsumkehrungserfassungseinrichtung (X), die konfiguriert ist, eine Polaritätsumkehrung eines Differentialwerts eines Magnetflusses, der in dem Stator (12) des Motors (10) erscheint, zu erfassen,
   wobei die Polaritätsumkehrungserfassungseinrichtung (X) umfasst
   eine Hilfswicklung (11d), die um einen Statorzahnabschnitt (11a) gewickelt ist, und
   eine Nulldurchgangserfassungseinheit (24), die konfiguriert ist, einen Nulldurchgang einer induzierten Spannung zu erfassen, die durch eine zeitliche Änderung einer Selbstinduktivität der Hauptanregungswicklung (15a, 15b, 15c) verursacht wird und in der Hilfswicklung (11d) aufgrund des zugeführten konstanten Stroms erscheint, wobei der Nulldurchgang in einer Schenkelpolgegenüberliegungsposition erfasst wird.

2. Rotorpositionserfassungsvorrichtung (Y) eines Motors (10), der einen Stator (12), der mit Schenkelpolen (11a, 11b, 11c) versehen ist, die einer Vielzahl von Phasen entsprechen, wobei jeder Schenkelpol (11a, 11b, 11c) mit einer Hauptanregungswicklung (15a, 15b, 15c) versehen ist, und einen Rotor (14) umfasst, der in dem Stator (12) angeordnet ist und mit einer Vielzahl von Schenkelpolen (13) versehen ist, wobei die Rotorpositionserfassungsvorrichtung (Y) konfiguriert ist, die Position des Rotors (14) in einer Situation zu erfassen, in der der Rotor (14) in einem nicht angeregten Zustand gedreht wird, in dem die Hauptanregungswicklung (15a, 15b, 15c) nicht für ein Antreiben angeregt ist, und umfasst:

   eine Konstantstromzufuhreinheit (23), die konfiguriert ist, der Hauptanregungswicklung (15a, 15b, 15c) einen konstanten Strom für eine Erfassung eines Nulldurchgangs zuzuführen; und
   eine Polaritätsumkehrungserfassungseinrichtung (X), die konfiguriert ist, eine Polaritätsumkehrung eines Differentialwerts eines Magnetflusses, der in dem Stator (12) des Motors (10) erscheint, zu erfassen,
   wobei die Polaritätsumkehrungserfassungseinrichtung (X) umfasst
   eine Hilfswicklung (11d), die um einen Jochabschnitt (12a) gewickelt ist, und
   eine Nulldurchgangserfassungseinheit (24), die konfiguriert ist, einen Nulldurchgang einer induzierten Spannung zu erfassen, die durch eine zeitliche Änderung einer Selbstinduktivität der Hauptanregungswicklung (15a, 15b, 15c) verursacht wird und in der Hilfswicklung (11d) aufgrund des zugeführten konstanten Stroms erscheint, wobei der Nulldurchgang in einer Schenkelpolgegenüberliegungsposition erfasst wird.

3. Motorsteuerungsvorrichtung (Z), die die Rotorpositionserfassungsvorrichtung (Y) nach Anspruch 1 oder 2 umfasst und konfiguriert ist, eine Anregung auf der Grundlage einer Rotorposition bei Erfassung einer Magnetflussumkehrung zu starten.

**Revendications**

1. Appareil de détection de position de rotor (Y) d'un moteur (10) comprenant un stator (12) qui est prévu avec des pôles saillants (11a, 11b, 11c) correspondant à une pluralité de phases, chaque pole saillant (11a, 11b, 11c) étant prévu avec un enroulement d'excitation principal (15a, 15b, 15c) et un rotor (14) qui est disposé dans le stator (12) et prévu avec une pluralité de pôles saillants (13), dans lequel l'appareil de détection de position de rotor (Y) est configuré pour détecter la position du rotor (14) dans une situation dans laquelle le rotor (14) est entraîné en rotation dans un état non excité, dans lequel l'enroulement d'excitation principal (15a, 15b, 15c) n'est pas excité pour l'entraînement et comprend :

une unité d'application de courant constant (23) qui est configurée pour appliquer un courant constant pour détecter le passage par zéro, sur l'enroulement d'excitation principal (15a, 15b, 15c) ; et
un moyen de détection d'inversion de polarité (X) qui est configuré pour détecter l'inversion de polarité d'une valeur différentielle d'un flux magnétique apparaissant dans le stator (12) du moteur (10),
dans lequel le moyen de détection d'inversion de polarité (X) comprend :

un enroulement auxiliaire (11d) enroulé autour d'une partie de dent de stator (11a), et
une unité de détection de passage par zéro (24) configurée pour détecter un passage par zéro d'une tension induite provoquée par un changement temporaire d'une auto-inductance de l'enroulement d'excitation principal (15a, 15b, 15c) et apparaissant dans l'enroulement auxiliaire (11d) en raison du courant constant appliqué, dans lequel le passage par zéro est détecté dans une position opposée de pôle saillant.

2. Appareil de détection de position de rotor (Y) d'un moteur (10) comprenant un stator (12) qui est prévu avec des pôles saillants (11a, 11b, 11c) correspondant à une pluralité de phases, chaque pole saillant (11a, 11b, 11c) étant prévu avec un enroulement d'excitation principal (15a, 15b, 15c) et un rotor (14) qui est disposé dans le stator (12) et prévu avec une pluralité de pôles saillants (13), dans lequel l'appareil de détection de position de rotor (Y) est configuré pour détecter la position du rotor (14) dans une situation dans laquelle le rotor (14) est entraîné en rotation dans un état non excité, dans lequel l'enroulement d'excitation principal (15a, 15b, 15c) n'est pas excité pour l'entraînement, et comprend :

une unité d'application de courant constant (23) qui est configurée pour appliquer un courant constant pour détecter le passage par zéro, sur l'enroulement d'excitation principal (15a, 15b, 15c) ; et
un moyen de détection d'inversion de polarité (X) qui est configuré pour détecter l'inversion de polarité d'une valeur différentielle d'un flux magnétique apparaissant dans le stator (12) du moteur (10),
dans lequel le moyen de détection d'inversion de polarité (X) comprend :

un enroulement auxiliaire (11d) enroulé autour d'une partie de culasse de stator (12a), et
une unité de détection de passage par zéro (24) configurée pour détecter un passage par zéro d'une tension induite provoquée par un changement temporaire d'une auto-inductance de l'enroulement d'excitation principal (15a, 15b, 15c) et apparaissant dans l'enroulement auxiliaire (11d) en raison du courant constant appliqué, dans lequel le passage par zéro est détecté dans une position opposée de pôle saillant.

3. Appareil de commande de moteur (Z) comprenant l'appareil de détection de position de rotor (Y) selon les revendications 1 ou 2, et configuré pour démarrer l'excitation sur la base d'une position de rotor suite à la détection d'une inversion de flux magnétique.

Fig. 1

15a    11a    10

A-PHASE    15c

11b    13    C-PHASE    11c

B-PHASE

15b    13    12

14    12a

13

11c    C-PHASE    B-PHASE    15b

11b

15c    A-PHASE    11a    15a

EP 3 168 981 B1

# Fig. 2

### (a) Salient pole non-aligned state

### (b) Salient pole aligned state

EP 3 168 981 B1

Fig. 3

## Fig. 4

A-PHASE
self-inductance

Auxiliary winding induced voltage

Zero-cross

Detection signal

Salient pole
opposed position

Salient pole
non-opposed position

Salient pole
opposed position

Rotor position

EP 3 168 981 B1

## Fig. 5

Z

Control circuit

22

28

Gate drive signal → Main circuit

15a~15c

Main winding

10

SR motor

Control signal → Micro constant current application circuit

23

Auxiliary winding

11d

Position detection signal ← Zero-cross detection circuit

24

Y

X

-------- Normal configuration

———— Additional configuration

EP 3 168 981 B1

# Fig. 6

Fig. 7

10

15a~15c

Main
winding

SR motor

Z

22

Control circuit

28

Main
circuit

Gate drive signal

Micro constant
current
application circuit

23

Control signal

Zero-cross
detection
circuit

24

Position detection
signal

X

Y

Normal configuration

Additional configuration

Fig. 8

# Fig. 9

$$L = L_u e^{j\frac{4}{3}\pi} + L_v e^{0} + L_w e^{j\frac{2}{3}\pi} \tag{1}$$

$$\theta_{elec} = \tan^{-1}\left(\frac{L\beta}{L\alpha}\right) = \tan^{-1}\left(\frac{\frac{\sqrt{3}}{2}(Lw-Lu)}{Lv - \frac{1}{2}(Lw-Lu)}\right) \tag{2}$$

$$L_j = V_{dc} \frac{\Delta T}{\Delta I_j} \tag{3}$$

# Fig. 10

Time 100[msec/div]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5180960 A

- EP 1471629 A2

**Non-patent literature cited in the description**

- Position Sensorless Control of SRM Using Space Vector Display of Self-inductance. **AKIYOSHI KOMATSUZAKI ; YOJIRO MIURA ; ICHIRO MIKI.** RM, Rotating Machine Study Group 2008 (90). Institute of Electrical Engineers Study Group Document, 12 November 2018, 11-16

- A digital method for the determination of the magnetic characteristic of variable reluctance motors. **FERRERO A. et al.** IEEE Transactions on Instrumentation and Measurement. IEEE Service Center, 01 August 1990, vol. 39